# EUROPÄISCHE PATENTSCHRIFT

(11) **EP 0 901 002 B1**
(45) Veröffentlichungstag und Bekanntmachung des Hinweises auf die Patenterteilung: **16.01.2002**
(21) Anmeldenummer: 98115753.0
(22) Anmeldetag: 21.08.1998
(51) Int. Cl.: G01D 5/20, G01D 3/028

(54) **Induktiver Winkelsensor für ein Kraftfahrzeug**
Inductive angle sensor for a motor vehicle
Capteur d'angle inductif pour une voiture

(30) Priorität: 05.09.1997 DE 19738834
(43) Veröffentlichungstag der Anmeldung: 10.03.1999
(73) Patentinhaber: Hella KG Hueck & Co., 59552 Lippstadt (DE)
(72) Erfinder: Irle, Henning, 59557 Lippstadt (DE); Kost, Norbert, 59590 Geseke (DE); Schmidt, Franz-Josef, 33154 Salzkotten (DE)

(56) Entgegenhaltungen:
- DE-A- 4 411 759
- US-A- 5 029 300
- PATENT ABSTRACTS OF JAPAN vol. 16, no. 432 (E-1262), 9. September 1992 & JP 04 150505 A (TOSHIBA CORP), 25. Mai 1992
- ROGER ALLAN: "Coil-Based Micromachined Sensor Measures Speed and Position for Automotive Applications" ELECTRONIC DESIGN,16. Dezember 1996, Seiten 34-37, XP000682027

## Beschreibung

Die Erfindung betrifft einen induktiven Winkelsensor für ein Kraftfahrzeug mit einer Oszillatorschaltung, welche ein periodisches Wechselspannungssignal erzeugt und in eine Erregerspule einkoppelt, mit mindestens einer Empfangsspule und einer Auswerteschaltung zur Auswertung der in der mindestens einen Empfangsspule induzierten Signale und einem beweglichen induktiven Koppelelement, welches die Stärke der induktiven Kopplung zwischen Erregerspule und Empfangsspule(n) beeinflußt.

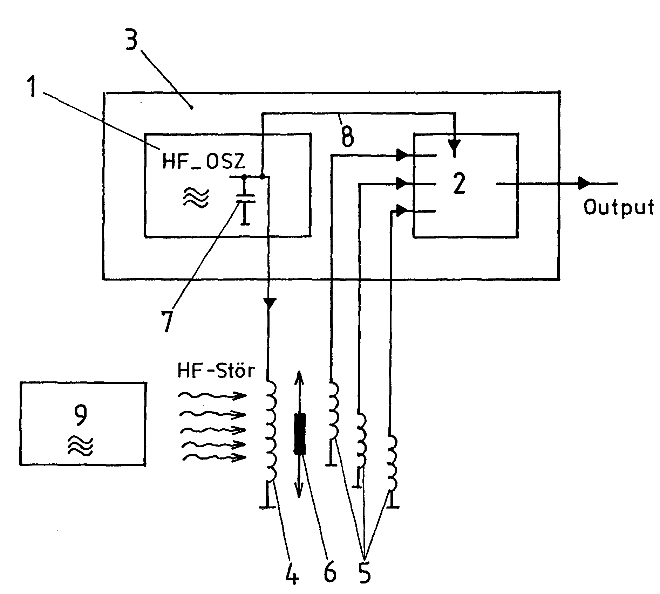

Ein solcher Winkelsensor ist beispielsweise aus der Figur 3 der Europäischen Patentanmeldung 0 159 191 A2 gezeigten Ausführungsform eines induktiven Positionssensors bekannt. Induktive Positionssensoren, und zwar insbesondere Winkelsensoren, kommen zunehmend, und zwar besonders in Kraftfahrzeugen, zur Anwendung und ersetzen dabei die heute noch vielfach verwendeten Widerstandssensoren (Potentiometer), da sie unter anderem die Vorteile besitzen, daß sie berührungslos funktionieren und damit praktisch verschleißfrei sind und zudem so ausführbar sind, daß sie weitgehend unempfindlich gegen Störungen sind, welche durch Verschmutzung entstehen.

Das allgemeine Funktionsprinzip induktiver Positionssensoren beruht darauf, daß ein in eine Erregerspule eingekoppeltes Wechselspannungssignal in einer oder, vorzugsweise, mehreren Empfangsspulen Wechselspannungssignale induziert. Die induktive Kopplung zwischen Erreger- und Empfangsspule(n) ist dabei von der Position zweier gegeneinander bewegbarer Elemente des Sensors abhängig ausgestaltet, und zwar entweder indem Erregerspule und Empfangsspule(n) gegeneinander beweglich sind oder indem ein induktiv wirksames Koppelelement (ausgeführt durch einen metallischen oder magnetischen Gegenstand oder eine Kurzschlußleitung) gegenüber Erregerspule und Empfangsspule(n) beweglich ist und deren induktive Kopplung positionsabhängig verändert.

Zur Bestimmung einer Position oder eines Drehwinkels dient eine Auswerteschaltung, die Amplitudenwerte und/oder Phasenlagen der Empfangsspulensignale auswertet.

Die DE-A-44 11 759 zeigt einen induktiven Positionssensor mit einer Sende- und einer Empfangsspule, sowie mit einer Skalenscheibe und einem Detektor zur Abtastung von Markierungen, welche in codierter Form Informationen zur Stellung der Skalenscheibe enthalten.

Aus der JP-A-4 150 505 ist ein Oszillator bekannt, der einen Verstärker mit festem und einen Verstärker mit variablem Verstärkungsfaktor aufweist Der Oszillator kann in zwei Betriebszuständen entweder mit fester oder mit veränderlicher Frequenz schwingen. Im Betriebszustand mit fester Schwingungsfrequenz ist der Q-Faktor des Resonanzkreises gegenüber dem Q-Faktor im Betriebszustand mit fester Schwingungsfrequenz vergrößert.

In der US-A-5 029 300 ist ein Metalldetektor mit einem LC-Resonanzkreis beschrieben, der bei einer Störung durch externe Radiofrequenzen die Ausgabe eines Erkennungssignals verhindert.

Ein besonderes Problem induktiver Sensoren, insbesondere solcher, die in Kraftfahrzeugen zur Anwendung kommen, ist die Empfindlichkeit gegenüber elektrischen, magnetischen bzw. elektromagnetischen Feldern, welche die von der/den Empfangsspule(n) aufgenommenen Signale verfälschen können.

Dieses ist besonders bei Kraftfahrzeuganwendungen problematisch, da hier eine Vielzahl von Störquellen auf engstem Raum vorhanden sein können, und zudem, je nach Anwendung, die Funktionsfähigkeit des Sensors als unbedingt sicherheitsrelevant zu bezeichnen ist, z. B. wenn der induktive Sensor die Winkelposition eines Fahrpedales oder einer Drosselklappe überwacht.

Elektromagnetische Störungen lassen sich zwar in der Regel durch eine geeignete Filterung (z. B. durch einen Bandpaß) beherrschen. Schwierig ist dies jedoch, wenn die Störfrequenz in der Nähe der Arbeitsfrequenz des Oszillators liegt und sich die zur Filterung dieser Störfrequenzen notwendigen, entsprechend steilen Filter aus technischen oder auch aus wirtschaftlichen Gründen nicht realisieren lassen. In diesem Fall kommt es zu einer Überlagerung von Oszillatorfrequenz und Störfrequenz, welche zu unerwünschten Effekten, insbesondere zu Schwebungen, führen, wodurch die Auswertung der Empfangsspulensignale erschwert oder sogar unmöglich wird.

Es ist daher die Aufgabe der Erfindung, auf einfache und kostengünstige Weise einen induktiven Winkelsensor zu schaffen, der gegenüber elektrischen, magnetischen oder elektromagnetischen Wechselfeldern, deren Störfrequenz in der Nähe der Arbeitsfrequenz des Oszillators liegt, weitgehend unempfindlich ist.

Diese Aufgabe wird erfindungsgemäß dadurch gelöst, daß die Oszillatorschaltung als LC-Schwingkreis ausgebildet ist, die ihre Schwingungsfrequenz unter dem Einfluß eingekoppelter elektrischer, magnetischer oder elektromagnetischer Wechselfelder, deren (Stör-) Frequenz in einem vorgegebenen Bereich in der Nähe der unbeeinflußten Grundfrequenz in der Oszillatorschaltung liegt, in Richtung auf die eingekoppelte Störfrequenz verschiebt, und daß der Gütefaktor der Oszillatorschaltung so gering ist, daß die Oszillatorschaltung bei einer durch extern eingekoppelte Wechselfelder bewirkten Verschiebung ihrer Schwingungsfrequenz von der Grundfrequenz innerhalb eines Bereiches von mindestens +/- 1 kHz stabil arbeitet.

Die Idee der Erfindung beruht darauf, daß die zum induktiven Sensor gehörende Oszillatorschaltung die Arbeitsfrequenz und die Störfrequenz miteinander synchronisiert, so daß Störfrequenz und Arbeitsfrequenz identisch und in Phase sind. Dies läßt sich mit einem sogenannten "weichen" Oszillator erreichen, der auf die eingekoppelten Störungen reagiert und die Arbeitsfrequenz zur Störfrequenz hin verschiebt. Dadurch werden unerwünschte Effekte einer elektromagnetischen Einstrahlung vermieden.

Dazu ist es vorteilhaft, daß die Oszillatorschaltung einen einfachen LC-Schwingkreis ohne besondere frequenzstabilisierende Mittel aufweist. Frequenzstabilere Oszillatoren, insbesondere Quarzoszillatoren, sind zu "starr", um sich auf eine Störfrequenz in der Nähe der ungestörten Grundfrequenz der Oszillatorschaltung zu synchronisieren, und wären daher zur Lösung der erfindungsgemäßen Aufgabe nicht geeignet. Vorteilhaft ist auch, daß eine Oszillatorschaltung mit einem einfachen LC-Schwingkreis zudem besonders kostengünstig zu fertigen ist.

Da insbesondere Störfrequenzen in der Nähe der Arbeitsfrequenz der Oszillatorschaltung besonders schwer ausfilterbar sind und zudem die dadurch entstehenden niederfrequenten Schwebungseffekte eine Auswertung der von den Empfangsspulen abgegebenen Signale erschweren, ist es vorteilhaft, wenn die Oszillatorschaltung einen "Ziehbereich" (das ist der Bereich, in dem sich die ungestörte Grundfrequenz der Oszillatorschaltung ändern läßt, ohne daß ihre Schwingungen abreißen oder instabil würden) in der Größenordnung von einigen Kilohertz liegt (bei einer Grundfrequenz in der Größenordnung MHz), wobei der vorgesehene "Ziehbereich" nicht kleiner sein sollte als 1 kHz.

Weitere vorteilhafte Ausgestaltungen und Weiterbildungen der Erfindung gehen aus den abhängigen Patentansprüchen hervor.

So ist es vorteilhaft, wenn die Erregerspule gleichzeitig die Induktivität des LC-Schwingkreises ausbildet. Durch die in die Erregerspule eingekoppelte Störfrequenz erfolgt dabei vorteilhafterweise die Beeinflussung der Oszillatorschaltung, sich der störenden Frequenz anzugleichen.

Vorteilhaft ist es zudem, der Auswerteschaltung die "tatsächliche", also eventuell durch äußere Einflüsse verschobene, Schwingungsfrequenz der Oszillatorschaltung als Referenzfrequenz zuzuführen, bzgl. derer die Auswerteschaltung die Signale der Empfangsspulen hinsichtlich Amplitude und Phasenlage auswertet.

Hierbei ist besonders vorteilhaft, wenn sowohl die Oszillatorschaltung (mit Ausnahme der zur Oszillatorschaltung gehörenden Erregerspule) und die Auswerteschaltung in einem einzigen integrierten Schaltkreis zusammengefaßt sind.

Das der Erfindung zugrundeliegende Prinzip sei im folgenden anhand der einzigen Figur beispielhaft erläutert.

Ein induktiver Winkelsensor weist eine Erregerspule (4) sowie drei gegeneinander versetzt angeordnete Empfangsspulen (5) auf. Die hier linear dargestellten Spulen (4, 5) sind bei einer Realisierung des Winkelsensors entlang des Umfangs eines Kreises oder Kreisabschnittes, z. B. durch gewundene Leiterbahnen auf einer Leiterplatte, angeordnet.

Ein integrierter Schaltkreis (3) enthält eine Oszillatorschaltung (1) sowie eine Auswerteschaltung (2). Die Oszillatorschaltung (1) weist einen LC-Schwingkreis auf, deren Kapazität (7) durch einen zum Schaltkreis gehörenden Kondensator und dessen Induktivität durch die Erregerspule (4) verkörpert wird.

Die Auswerteschaltung (2) erhält die Signalleitungen der Empfangsspulen (5) zugeführt und berechnet aus den Amplituden und Phasenlagen der Empfangsspulensignale die Position eines relativ zur Spulenanordnung beweglich angeordneten induktiven Koppelelementes (6), welches positionsabhängig eine unterschiedlich starke Kopplung zwischen Erregerspule (4) und Empfangsspulen (5) bewirkt.

Die Auswerteschaltung (2) berechnet ihr Ausgangssignal (Output) in Abhängigkeit von der Schwingungsfrequenz (HF_OSZ) der Oszillatorschaltung (1), welche ihr über eine Verbindungsleitung (8) zugeführt wird.

Das der Erfindung zugrundeliegende Problem tritt auf, wenn eine Störquelle (9) eine Störfrequenz (HF_Stör) in das Spulensystem (4, 5) einkoppelt, welches in der Nähe der Schwingungsfrequenz (HF_OSZ) der Oszillatorschaltung (1) liegt.

Durch die Überlagerung der Oszillatorfrequenz (HF_OSZ) und der Störfrequenz (HF_Stör) kann es zu niederfrequenten Schwebungen kommen, welche die Auswertung der Empfangsspulensignale durch die Auswerteschaltung (2) erschweren oder gar unmöglich machen.

Bei der Oszillatorschaltung (1) des erfindungsgemäßen Winkelsensors "zieht" die in die Erregerspule (4) eingekoppelte Störfrequenz (HF_Stör) die Oszillatorfrequenz in Richtung auf die Störfrequenz, so daß bei nicht allzu großer Abweichung zwischen der (ungestörten) Oszillatorfrequenz und der Störfrequenz (HF_Stör) die Oszillatorschaltung schließlich genau mit der Frequenz und Phasenlage der Störfrequenz schwingt (HF_OSZ = HF_Stör).

Unerwünschte Überlagerungseffekte (Schwebungen) werden so wirkungsvoll vermieden. Der "Ziehbereich" der Oszillatorschaltung liegt bei mindestens einem Kilohertz und kann über den dissipativen Anteil des LC-Schwingkreises vorgegeben werden.

### Bezugszeichenliste

### Induktiver Winkelsensor für ein Kraftfahrzeug

- 1: Oszillatorschaltung
- 2: Auswerteschaltung
- 3: Schaltkreis
- 4: Erregerspule
- 5: Empfangsspule
- 6: induktives Koppelelement
- 7: Kapazität
- 8: Verbindungsleitung
- 9: Störquelle

- HF_OSZ: Schwingungsfrequenz (der Oszillatorschaltung)
- HF_Stör: Störfrequenz
- Output: Ausgangssignal

## Patentansprüche

1. Induktiver Winkelsensor für ein Kraftfahrzeug mit einer Oszillatorschaltung (1), welche ein periodisches Wechselspannungssignal erzeugt und in eine Erregerspule (4) einkoppelt, mit mindestens einer Empfangsspule (5) und einer Auswerteschaltung (2) zur Auswertung der in der mindestens einen Empfangsspule (5) induzierten Signale und einem beweglichen induktiven Koppelelement (6), welches die Stärke der induktiven Kopplung zwischen Erregerspule (4) und Empfangsspule(n) (5) beeinflußt, **dadurch gekennzeichnet, daß** die Oszillatorschaltung (1) als LC-Schwingkreis ausgebildet ist, die ihre Schwingungsfrequenz (HF_OSZ) unter dem Einfluß eingekoppelter elektrischer, magnetischer oder elektromagnetischer Wechselfelder, deren (Stör-) Frequenz (HF_Stör) in einem vorgegebenen Bereich in der Nähe der unbeeinflußten Grundfrequenz der Oszillatorschaltung (1) liegt, in Richtung auf die eingekoppelte Störfrequenz (HF_Stör) verschiebt, und daß der Gütefaktor der Oszillatorschaltung (1) so gering ist, daß die Oszillatorschaltung (1) bei einer durch extern eingekoppelte Wechselfelder bewirkten Verschiebung ihrer Schwingungsfrequenz von der Grundfrequenz innerhalb eines Bereiches von mindestens +/- kHz stabil arbeitet.

2. Induktiver Winkelsensor nach Anspruch 1, **dadurch gekennzeichnet, daß** die Erregerspule (4) gleichzeitig die Induktivität des LC-Schwingkreises der Oszillatorschaltung (1) ausbildet.

3. Induktiver Winkelsensor nach Anspruch 1, **dadurch gekennzeichnet, daß** die Oszillatorschaltung (1) der Auswerteschaltung (2) ihre durch extern eingekoppelte Wechselfelder verschobene Schwingungsfrequenz (HF_OSZ) als Referenzfrequenz zuführt.

4. Induktiver Winkelsensor nach den Ansprüchen 1 und 2, **dadurch gekennzeichnet, daß** die Oszillatorschaltung (1) und die Auswerteschaltung (2) bis auf die zur Oszillatorschaltung (1) gehörende Erregerspule (4) in einem integrierten Schaltkreis (3) zusammengefaßt sind.

## Claims

1. Inductive angle sensor for a motor vehicle, with an oscillator circuit (1) which generates a periodic alternating voltage signal and injects into an excitation coil (4), with at least one receive coil (5) and an evaluation circuit (2) for evaluating the signals induced in the at least one receive coil (5), and with a movable inductive coupling element (6) which influences the strength of the inductive coupling between the excitation coil (4) and the receive coil(s) (5), **characterised in that** the oscillator circuit (1) is configured as an LC tuned circuit which, under the influence of injected electric, magnetic or electromagnetic alternating fields whose (interference) frequency (HF_inter) lies in a specified range close to the prospective fundamental frequency of the oscillator circuit (1), shifts its vibration frequency (HF_OSZ) in the direction of the injected interference frequency (HF_inter), and that the quality factor of the oscillator circuit (1) is so small that the oscillator circuit (1) operates stably in the event of a shift in its vibration frequency, caused by externally injected alternating fields, from the fundamental frequency within a range of at least +/- 1 kHz.

2. Inductive angle sensor according to claim 1,
**characterised in that** the excitation coil (4) simultaneously decides the inductivity of the LC tuned circuit of the oscillator circuit (1).

3. Inductive angle sensor according to claim 1,
**characterised in that** the oscillator circuit (1) of the evaluation circuit (2) supplies as a reference frequency its vibration frequency (HF_OSZ) which has shifted as a result of externally injected alternating fields.

4. Inductive angle sensor according to claims 1 and 2, **characterised in that** the oscillator circuit (1) and the evaluation circuit (2) are combined in an integrated circuit (3), except for the excitation coil (4) which belongs to the oscillator circuit (1).

## Revendications

1. Capteur angulaire inductif pour un véhicule automobile comportant un circuit d'oscillateur (1), qui produit un signal périodique de tension alternative et l'injecte dans une bobine d'excitation (4), comportant au moins une bobine de réception (5) et un circuit d'évaluation (2) pour évaluer les signaux induits dans la au moins une bobine de réception (5), et un élément de couplage inductif mobile (6), qui influe sur la force du couplage inductif entre la bobine d'excitation (4) et la ou les bobines de réception (5), **caractérisé en ce que** le circuit d'oscillateur (1) est agencé sous la forme d'un circuit oscillant LC, dont la fréquence d'oscillation (HF_OSZ) se déplace, sous l'influence de champs alternatifs électriques, magnétiques ou électromagnétiques injectés, dont la fréquence (parasite) (HF_Stör) est située dans une plage prédéterminée à proximité de la fréquence de base non influencée du circuit d'oscillateur (1), en direction de la fréquence parasite injectée (HF_Stör) et que le facteur de qualité du circuit d'oscillateur (1) est suffisamment faible pour que dans le cas d'un décalage, provoqué par des champs alternatifs injectés de l'extérieur, de la fréquence d'oscillation du circuit d'oscillateur (1) par rapport à la fréquence de base, le circuit d'oscillateur travaille d'une manière stable dans une gamme d'au moins +/- 1 kHz.

2. Capteur angulaire inductif selon la revendication 1, **caractérisé en ce que** la bobine d'excitation (4) forme simultanément l'inductance du circuit oscillant LC du circuit d'oscillateur (1).

3. Capteur angulaire inductif selon la revendication 1, **caractérisé en ce que** le circuit d'oscillateur (1) envoie au circuit d'évaluation (2) en tant que fréquence de référence sa fréquence d'oscillation (HF_OSZ) décalée par des champs alternatifs injectés de l'extérieur.

4. Capteur angulaire inductif selon les revendications 1 et 2, **caractérisé en ce que** le circuit d'oscillateur (1) et le circuit d'évaluation (2) sont réunis, hormis la bobine d'excitation (4) qui fait partie du circuit d'oscillateur (1), dans un circuit intégré (3).
